# EUROPEAN PATENT APPLICATION

(11) **EP 4 475 319 A1**
(43) Date of publication of application: **11.12.2024**
(21) Application number: 23746953.1
(22) Date of filing: 24.01.2023
(51) Int. Cl.: H01M 50/414, H01G 11/26, H01G 11/52, H01G 11/84, H01G 11/86, H01M 4/13, H01M 50/403, H01M 50/42, H01M 50/443, H01M 50/451, H01M 50/489

(54) **POLYMER FOR ELECTROCHEMICAL ELEMENT FUNCTIONAL LAYER, METHOD FOR PRODUCING SAID POLYMER, COMPOSITION FOR ELECTROCHEMICAL ELEMENT FUNCTIONAL LAYER, BASE MATERIAL WITH ELECTROCHEMICAL ELEMENT FUNCTIONAL LAYER, AND ELECTROCHEMICAL ELEMENT**

(30) Priority: 31.01.2022 JP 2022013755
(71) Applicant: Zeon Corporation, Tokyo 100-8246 (JP)
(72) Inventor: HARADA, Ayumi, Tokyo 100-8246 (JP)
(74) Representative: Maiwald GmbH
(86) International application number: PCT/JP2023/002148
(87) International publication number: WO 2023/145742

(57) **Abstract**

A particulate polymer containing 5 mass% or more and 30 mass% or less of at least one of an epoxy group-containing unsaturated monomer unit or a nitrile group-containing unsaturated monomer unit, in which the distribution concentration of atoms X (oxygen atoms or nitrogen atoms) is highest in the vicinity of the surface of the particulate polymer.

## Description

### TECHNICAL FIELD

The present disclosure relates to a polymer for an electrochemical element functional layer, a method of producing the polymer, a composition for an electrochemical element functional layer, a substrate with functional layer for an electrochemical element, and an electrochemical element.

### BACKGROUND

Electrochemical elements such as lithium-ion secondary cells and electric double layer capacitors are used in a wide range of applications because of their compact size, light weight, high energy density, and ability to charge and discharge repeatedly.

Here, for example, a lithium-ion secondary cell typically includes battery members such as a positive electrode, a negative electrode, and a separator that isolates the positive and negative electrodes and prevents a short circuit between the positive and negative electrodes.

In recent years, electrochemical elements such as lithium-ion secondary cells have been using constituent members including a functional layer such as an adhesive layer to improve adhesion between constituent members. Specifically, electrodes consisting of an electrode substrate of an electrode composite layer on a current collector and a further functional layer on the electrode substrate, and separators consisting of a functional layer on a separator substrate are used as such battery members. And in recent years, further improvement of functional layers has been considered in order to further improve the performance of electrochemical elements such as lithium-ion secondary cells. Specifically, for example, in Patent Literature (PTL) 1 is a proposal to form a functional layer that can demonstrate excellent adhesion by mixing a particulate polymer that has an average circularity of 0.90 or more and less than 0.99 and a volume average particle size of 1.0 µm or more and 10.0 µm or less in a composition for a functional layer.

### CITATION LIST

### Patent Literature

PTL 1: WO 2020/175292 A1

### SUMMARY

### (Technical Problem)

However, the functional layer formed using the above conventionally known particulate polymer and the like had room for further improvement in terms of adhesion after immersion in electrolyte solution (hereinafter also referred to as "wet adhesion").

Accordingly, it would be helpful to provide a polymer for an electrochemical element functional layer that can be appropriately used to form a functional layer having excellent wet adhesion and a method of producing the same.

Further, it would be helpful to provide a composition for a functional layer that can form a functional layer having excellent wet adhesion.

Further, it would be helpful to provide a substrate with functional layer for an electrochemical element including the functional layer for an electrochemical element formed using the composition for a functional layer according to the present disclosure, and an electrochemical element including the substrate with functional layer.

### (Solution to Problem)

The inventor has made extensive studies to achieve the above. The inventor has discovered that with respect to a particulate polymer containing a monomer unit including at least one of oxygen atoms or nitrogen atoms in a defined ratio, when distribution of the at least one of oxygen atoms or nitrogen atoms, hereinafter also referred to as atoms X, in the vicinity of the surface of the particulate polymer is obtained, and the particulate polymer has a structure in which concentration of the atoms X increases toward the outermost surface, wet adhesion of a resulting functional layer can be made good. The present disclosure was completed based on the new discovery.

That is, in order to advantageously solve the technical problem described above, [1] the polymer for an electrochemical element functional layer according to the present disclosure is a particulate polymer for an electrochemical element functional layer, the particulate polymer comprising: 5 mass% or more and 30 mass% or less of at least one of an epoxy group-containing unsaturated monomer unit or a nitrile group-containing unsaturated monomer unit, wherein, when distribution of at least one of oxygen atoms or nitrogen atoms, hereinafter referred to as atoms X, contained in the particulate polymer is obtained in the vicinity of the surface of the particulate polymer, when concentration of the atoms X at the outermost surface of the particulate polymer is considered to be 100 %, then in a direction from the outermost surface to the center of the particulate polymer, in a region of depth 1.0 % or more and 1.5 % or less, the concentration of the atoms X is 20 % or more and 50 % or less, in a region of depth 0.5 % or more and less than 1.0 %, the concentration of the atoms X is 50 % or more and 80 % or less, and in a region of depth less than 0.5 %, the concentration of the atoms X is 80 % or more and 100 % or less.

Here, when the polymer "comprises a monomer unit", this means that the polymer obtained using the monomer includes monomer-derived structural units. Further, the content ratio of monomer units in the polymer can be measured using a nuclear magnetic resonance (NMR) method such as ¹H-NMR. Further, concentration distribution of the atoms X in the polymer can be determined by energy dispersive X-ray analysis according to a method described in the EXAMPLES section of the present disclosure.
[2] Here, the polymer for an electrochemical element functional layer according to [1], above, preferably has a glass transition temperature of 40 °C or more and 150 °C or less. When the glass transition temperature of the particulate polymer is in the range described, a resulting functional layer can have increased blocking resistance and wet adhesion can be further increased. The glass transition temperature of the polymer may be measured according to a method described in the EXAMPLES section of the present disclosure.
[3] Further, the polymer for an electrochemical element functional layer according to [1] or [2], above, preferably has an average circularity of 0.90 or more and 0.99 or less. When the average circularity of the polymer is in the range described, the wet adhesion of a resulting functional layer can be further increased. The average circularity of the polymer may be measured according to a method described in the EXAMPLES section of the present disclosure.
[4] Further, the polymer for an electrochemical element functional layer according to any one of [1] to [3], above, preferably further comprises at least one of an aromatic vinyl monomer unit or a (meth)acrylic acid ester monomer unit. When the polymer has the described composition, the wet adhesion of a resulting functional layer can be further improved. In the present disclosure, (meth)acryl means acryl or methacryl.
[5] Further, in order to advantageously solve the technical problem described above, a method of producing the polymer for an electrochemical element functional layer according to any one of [1] to [4], above, is a method comprising: a first polymerization process for polymerizing a first monomer composition including at least one of an aromatic vinyl monomer, an epoxy group-containing unsaturated monomer unit, or a nitrile group-containing unsaturated monomer unit; and, at a timing when a polymerization conversion rate in the first polymerization process becomes 70 % or more and 95 % or less, a second polymerization process for polymerizing a second monomer composition including at least one of an epoxy group-containing unsaturated monomer unit or a nitrile group-containing unsaturated monomer unit is added to the polymerization system for an addition time of 5 minutes or more to 1 hour or less, wherein, when mass of all monomer units contained in the first monomer composition and the second monomer composition is considered to be 100 mass%, the total amount of the epoxy-group containing unsaturated monomer unit and the nitrile-group containing unsaturated monomer unit is 5 mass% or more and 30 mass% or less. According to the method of producing the polymer for an electrochemical element functional layer of the present disclosure, the polymer for an electrochemical element functional layer of the present disclosure that satisfies a defined structure can be efficiently produced.
[6] Further, in order to advantageously solve the technical problem described above, a composition for an electrochemical element functional layer according to the present disclosure comprises a binder and the polymer for an electrochemical element functional layer according to any one of [1] to [4], above. By using the described composition for a functional layer, a functional layer having excellent wet adhesion can be formed.
[7] Further, in order to advantageously solve the technical problem described above, a substrate with functional layer for an electrochemical element according to the present disclosure comprises a substrate and a functional layer formed on the substrate, wherein the functional layer is formed using the composition for an electrochemical element functional layer according to [6], above. The substrate with functional layer according to the present disclosure has excellent wet adhesion, and electrochemical properties of an electrochemical element including the substrate can be improved.
[8] In the substrate with functional layer for an electrochemical element according to [7], above, the substrate may be a separator substrate or an electrode substrate.
[9] Further, in order to advantageously solve the technical problem described above, an electrochemical element according to the present disclosure comprises the substrate with functional layer for an electrochemical element according to [7], above. The electrochemical element according to the present disclosure has excellent electrochemical properties.

### (Advantageous Effect)

The present disclosure provides a polymer for a functional layer that can be appropriately used to form a functional layer having excellent wet adhesion and a method of producing same.

Further, the present disclosure provides a composition for a functional layer that can form a functional layer having excellent wet adhesion.

Further, the present disclosure provides a substrate with functional layer for an electrochemical element including the functional layer for an electrochemical element formed using the composition for a functional layer according to the present disclosure, and an electrochemical element including the substrate with functional layer.

### DETAILED DESCRIPTION

The following is a detailed description of embodiments of the present disclosure.

Here, the polymer for an electrochemical element functional layer and the composition for an electrochemical element functional layer including the polymer (hereinafter also referred to simply as "composition for a functional layer") can be appropriately used in forming a substrate with functional layer for an electrochemical element according to the present disclosure. The polymer for an electrochemical element functional layer according to the present disclosure can be efficiently produced according to the method of producing the polymer for an electrochemical element functional layer. Further, the electrochemical element according to the present disclosure is an electrochemical element including at least the substrate with functional layer for an electrochemical element according to the present disclosure.

### (Polymer for electrochemical element functional layer)

The polymer for an electrochemical element functional layer according to the present disclosure is a particulate polymer including 5 mass% or more and 30 mass% or less of at least one of an epoxy group-containing unsaturated monomer unit or a nitrile group-containing unsaturated monomer unit. Further, in the polymer for an electrochemical element functional layer (hereinafter also referred to simply as "particulate polymer"), when distribution of at least one of oxygen atoms or nitrogen atoms, hereinafter also referred to as atoms X, contained in the particulate polymer is obtained in the vicinity of the surface of the particulate polymer, when concentration of the atoms X at the outermost surface of the particulate polymer is considered to be 100 %, then in a direction from the outermost surface to the center of the particulate polymer, in a region of depth 1.0 % or more and 1.5 % or less, the concentration of the atoms X is 20 % or more and 50 % or less, in a region of depth 0.5 % or more and less than 1.0 %, the concentration of the atoms X is 50 % or more and 80 % or less, and in a region of depth less than 0.5 %, the concentration of the atoms X is 80 % or more and 100 % or less. When the particulate polymer meets the described composition and structural conditions, the wet adhesion of a resulting functional layer can be increased.

### <Distribution of oxygen atoms or nitrogen atoms in vicinity of surface of particulate polymer>

In the vicinity of the surface of the particulate polymer as the polymer for an electrochemical element functional layer according to the present disclosure, distribution of at least one of oxygen atoms or nitrogen atoms, hereinafter also referred to as atoms X, is as follows. When the concentration of the atoms X at the outermost surface of the particulate polymer is considered to 100 %, then in a direction from the outermost surface to the center of the particulate polymer: in a region of depth 1.0 % or more and 1.5 % or less (hereinafter also referred to as "region I"), the concentration of the atoms X is 20 % or more, preferably 30 % or more, 50 % or less, preferably 45 % or less, and more preferably 40 % or less; in a region of depth 0.5 % or more and less than 1.0 % (hereinafter also referred to as "region II"), the concentration of the atoms X is 50 % or more, preferably 60 % or more, more preferably 65 % or more, 80 % or less, and preferably 75 % or less; and in a region from the outermost surface to depth less than 0.5 % (hereinafter also referred to as "region III"), the concentration of the atoms X is 80 % or more, preferably 90 % or more, more preferably 95 % or more, and may be 100 %. When the distribution pattern of the atoms X in regions I to III is within the ranges described, good wet adhesion can be achieved in a resulting functional layer. More specifically, the concentration of the atoms X in regions I and II is equal to or less than the upper limits described above, which means that the amount of the atoms X present in the vicinity of the outermost surface is greater than in an inner portion. It may be inferred that the atoms X, which are relatively abundant in the vicinity of the outermost surface of the particulate polymer, can efficiently interact with other constituent members that are adherends in a state after immersion in electrolyte solution, and as a result, the wet adhesion of the functional layer can be increased. Similarly, the concentration of the atoms X in regions II and III being equal to or greater than the lower limits described above also means that the amount of the atoms X present in the vicinity of the outermost surface is greater than in an inner portion, which may increase the wet adhesion of a resulting functional layer for the same reason described above. Further, when the concentration of the atoms X in region I is equal to or greater than the lower limit described above, some amount of the atoms X is present in the region slightly inward from the outermost surface region, which may increase the wet adhesion of a resulting functional layer.

### <Distribution parameter of oxygen atoms or nitrogen atoms>

Here, regarding the distribution pattern of the atoms X described above, a difference D1 in concentration between region III and region is calculated, a difference D2 in concentration between region II and region I is calculated, and an absolute value of D1 - D2 can be set as a distribution parameter of oxygen atoms or nitrogen atoms in the vicinity of the surface of the particulate polymer. A smaller value of the described distribution parameter may indicate that the gradient of the atoms X is more evenly formed in regions I to III. On the other hand, a large value of the distribution parameter may indicate that the gradient of the atoms X in regions I to III is not even and that the atoms X may be concentrated in certain regions. Therefore, the value of the distribution parameter is preferably 15 % or less, more preferably 10 % or less, even more preferably 5 % or less, and of course may be 0 %. When the value of the distribution parameter is equal to or less than the upper limit described above, the wet adhesion and blocking resistance of a resulting functional layer can be increased.

### <Glass transition temperature of particulate polymer>

The glass transition temperature of the particulate polymer is preferably 40 °C or more, more preferably 50 °C or more, even more preferably 60 °C or more, preferably 150 °C or less, more preferably 120 °C or less, and even more preferably 100 °C or less. When the glass transition temperature is equal to or greater than the lower limit described above, the blocking resistance of a resulting functional layer can be increased. When the glass transition temperature is equal to or less than the upper limit described above, the wet adhesion of a resulting functional layer can be further improved, thereby improving electrochemical properties such as cycle characteristics and output characteristics of a resulting electrochemical element. The glass transition temperature of the particulate polymer can be controlled to a desired value by adjusting the composition of the particulate polymer.

### <Average circularity of particulate polymer>

The particulate polymer preferably has an average circularity of 0.90 or more, more preferably 0.93 or more, even more preferably 0.95 or more, and may be as close to 1.0 as possible, for example, 0.99 or less. When the average circularity of the particulate polymer is equal to or greater than the lower limit described above, the form of the particulate polymer in the vicinity of the surface of the functional layer or exposed from the surface of the functional layer when the functional layer is formed is a form close to a true sphere, which enables good adhesion to adherends and effectively increases the wet adhesion of the functional layer. The average circularity of the particulate polymer can be controlled according to polymerization method.

### <Volume average particle size of particulate polymer>

The volume average particle size of the particulate polymer is preferably 0.5 µm or more, more preferably 1.0 µm or more, even more preferably 2.0 µm or more, preferably 15 µm or less, more preferably 10 µm or less, and even more preferably 5 µm or less. When the volume average particle size of the particulate polymer is equal to or greater than the lower limit described above, the wet adhesion of a resulting functional layer can be further increased. Further, when the volume average particle size of the particulate polymer is equal to or less than the upper limit described above, the particulate polymer detaching from the functional layer when the functional layer is formed can be effectively suppressed. The volume average particle size of the particulate polymer can be adjusted by type and amount of metal hydroxide used in preparation of the particulate polymer. Metal hydroxides are described in detail below.

As the volume average particle size of the particulate polymer, particle size distribution (volume-based) was obtained according to a method described in the EXAMPLES section, and particle size D50 was adopted, which is the particle size at which cumulative volume calculated from the small particle size end of the distribution is 50 %.

### <Composition of particulate polymer>

The particulate polymer includes 5 mass% or more and 30 mass% or less of at least one of the epoxy group-containing unsaturated monomer unit or the nitrile group-containing unsaturated monomer unit, when the total of repeating units contained in the particulate polymer is considered to be 100 mass%. Further, in addition to an epoxy group-containing unsaturated monomer unit or a nitrile group-containing unsaturated monomer unit, the particulate polymer may also contain an aromatic vinyl monomer unit, a (meth)acrylic acid ester monomer unit, a cross-linkable monomer unit, a N-methylol amide group-containing monomer unit, or the like.

### [Epoxy group-containing unsaturated monomer unit and nitrile group-containing unsaturated monomer unit]

The particulate polymer need only include at least one of an epoxy group-containing unsaturated monomer unit or a nitrile group-containing unsaturated monomer unit, and may include both. When the particulate polymer includes both, the total amount of both is preferably 5 mass% or more and 30 mass% or less, when the total of repeating units contained in the particulate polymer is considered to be 100 mass%. Further, when the total of repeating units contained in the particulate polymer is considered to be 100 mass%, the content ratio of both or at least one of the epoxy group-containing unsaturated monomer unit or the nitrile group-containing unsaturated monomer unit in the particulate polymer is preferably 7 mass% or more, more preferably 10 mass% or more, preferably 25 mass% or less, and more preferably 20 mass% or less. When the content ratio of both or at least one of these is equal to or greater than the lower limit described above, the wet adhesion of a resulting functional layer can be further improved. When the content ratio of both or at least one of these is equal to or less than the upper limit described above, the particulate polymer can be stably prepared and the blocking resistance of a resulting functional layer can be increased.

### [Epoxy group-containing unsaturated monomer unit]

Examples of epoxy group-containing unsaturated monomers that can form an epoxy group-containing unsaturated monomer unit include: unsaturated glycidyl ethers such as vinyl glycidyl ether, allyl glycidyl ether, butenyl glycidyl ether, o-allyl phenyl glycidyl ether, and glycidyl(2-butenyl) ether; diene or polyene monoepoxides such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; glycidyl esters of unsaturated carboxylic acids such as glycidyl acrylate, glycidyl methacrylate, glycidyl crotonate, glycidyl-4-heptenoate, glycidyl sorbate, glycidyl linoleate glycidyl-4-methyl-3-pentenoate, glycidyl ester of 3-cyclohexene carboxylic acid, and glycidyl ester of 4-methyl-3-cyclohexene carboxylic acid; and the like. Among these, from the viewpoint of further increasing the wet adhesion of a functional layer, use of unsaturated glycidyl ethers and glycidyl esters of unsaturated carboxylic acids is preferred, and use of glycidyl methacrylate is more preferred. One of these epoxy group-containing unsaturated monomers may be used alone, or two or more may be used in combination in any ratio.

### [Nitrile group-containing unsaturated monomer unit]

Examples of nitrile group-containing unsaturated monomers that can form the nitrile group-containing unsaturated monomer unit include α,β-ethylenically unsaturated nitrile monomers. Specifically, α,β-ethylenically unsaturated nitrile monomers are not particularly limited, may be any α,β-ethylenically unsaturated compound including a nitrile group, and examples include: acrylonitrile; α-halogenoacrylonitrile such as α-chloroacrylonitrile and α-bromoacrylonitrile; α-alkylacrylonitrile such as methacrylonitrile and α-ethylacrylonitrile; and the like. One of these nitrile group-containing unsaturated monomers may be used alone, or two or more may be used in combination in any ratio.

### [Aromatic vinyl monomer unit]

Examples of aromatic vinyl monomers that can form an aromatic vinyl monomer unit are not particularly limited and examples include styrene, α-methylstyrene, styrene sulfonic acid, butoxystyrene, vinylnaphthalene, and the like. Among these, styrene is preferred.

One of these aromatic vinyl monomers may be used alone, or two or more may be used in combination in any ratio.

When the total of monomer units in the particulate polymer is considered to be 100 mass%, the content ratio of the aromatic vinyl monomer unit in the particulate polymer is preferably 30 mass% or more, more preferably 60 mass% or more, preferably 95 mass% or less, and more preferably 90 mass% or less. When the content ratio of the aromatic vinyl monomer unit is equal to or greater than the lower limit described above, elasticity of the particulate polymer is improved and adhesive strength of a functional layer can be increased. On the other hand, when the content ratio of the aromatic vinyl monomer unit is equal to or less than the upper limit described above, flexibility of the particulate polymer is increased and a film-forming property during drying of the composition for a functional layer is improved. Accordingly, adhesive strength of a functional layer can be increased.

### [(Meth)acrylic acid ester monomer unit]

Examples of (meth)acrylic acid ester monomers that can form a (meth)acrylic acid ester monomer unit include: acrylic acid alkyl esters such as methyl acrylate, ethyl acrylate, n-propyl acrylate, isopropyl acrylate, butyl acrylate such as n-butyl acrylate and t-butyl acrylate, pentyl acrylate, hexyl acrylate, heptyl acrylate, octyl acrylate such as 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate such as n-butyl methacrylate and t-butyl methacrylate, pentyl methacrylate, hexyl methacrylate, heptyl methacrylate, octyl methacrylate such as 2-ethylhexyl methacrylate, nonyl methacrylate, decyl methacrylate, lauryl methacrylate, n-tetradecyl methacrylate, and stearyl methacrylate; and the like. Among these, n-butyl acrylate, 2-ethylhexyl acrylate, and methyl methacrylate are preferred, and 2-ethylhexyl acrylate is more preferred.

One of these (meth)acrylic acid ester monomers may be used alone, or two or more may be used in combination in any ratio.

When the total of repeating units in the particulate polymer is considered to be 100 mass%, the content ratio of the (meth)acrylic ester monomer unit in the particulate polymer is preferably 1 mass% or more, more preferably 5 mass% or more, preferably 50 mass% or less, and more preferably 40 mass% or less. When the content ratio of the (meth)acrylic ester monomer unit is equal to or greater than the lower limit described above, excessive decrease in the glass transition temperature of the particulate polymer can be avoided and the blocking resistance of a resulting functional layer can be improved. On the other hand, when the content ratio of the (meth)acrylic acid ester monomer unit is equal to or less than the upper limit described above, the adhesive strength of a functional layer can be increased.

### [N-methylol amide group-containing monomer unit]

Examples of monomers that can form a N-methylol amide group-containing monomer unit include (meth)acrylamides including a methylol group such as N-methylol(meth)acrylamide. One of these may be used alone, or two or more may be used in combination in any ratio.

When the particulate polymer includes a N-methylol amide group-containing monomer unit, and when the total of monomer units in the particulate polymer is considered to be 100 mass%, the content ratio is preferably 0.02 mass% or more and 10% or less. When the content ratio of the N-methylol amide group-containing monomer unit in the particulate polymer is in the range described above, elution of the particulate polymer into electrolyte solution can be sufficiently suppressed.

### [Cross-linkable monomer unit]

Examples of monomers that can form a cross-linkable monomer unit include, for example, multifunctional monomers including two or more polymerization-reactive groups in the monomer. Examples of such multifunctional monomers include: allyl (meth)acrylate; divinyl compounds such as divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; and the like. Among these, ethylene glycol dimethacrylate is preferred. One of these cross-linkable monomers may be used alone, or two or more may be used in combination in any ratio. Further, although the epoxy group-containing unsaturated monomer unit and N-methylol amide group-containing monomer unit described above are also cross-linkable monomer units, the cross-linkable monomer unit here does not include units corresponding to the epoxy group-containing unsaturated monomer unit or N-methylol amide group-containing monomer unit described above.

When the total of monomer units in the particulate polymer is considered to be 100 mass%, the content ratio of the cross-linkable monomer unit in the particulate polymer is preferably 0.02 mass% or more, preferably 2 mass% or less, more preferably 1.5 mass% or less, and even more preferably 1 mass% or less. When the content ratio of the cross-linkable monomer unit in the particulate polymer is in the range described above, elution of the particulate polymer into electrolyte solution can be sufficiently suppressed.

### (Method of producing polymer for electrochemical element functional layer)

The particulate polymer as the polymer for an electrochemical element functional layer according to the present disclosure can be prepared by polymerizing a monomer composition including a monomer described above in an aqueous solvent such as water, for example. Here, the ratio of each monomer in the monomer composition is typically the same as the ratio of each monomer unit in the particulate polymer.

The method of polymerization is not particularly limited, and any of the following methods can be used: suspension polymerization, emulsion polymerization aggregation, pulverization, and the like. Among these, suspension polymerization and emulsion polymerization aggregation are preferred, and suspension polymerization is more preferred. Further, as a polymerization reaction, any of radical polymerization, living radical polymerization, and the like may be used.

### [Other compounding agents]

Further, other compounding agents may be mixed into the monomer composition used in the preparation of the particulate polymer, such as a chain transfer agent, a polymerization regulator, a polymerization reaction retarder, a reactive fluidizer, a filler, a flame retardant, an antioxidant, a colorant, and the like in any amounts.

Here, as an example, a method of preparing a particulate polymer by suspension polymerization is described.

### [Preparation of particulate polymer by suspension polymerization]

### (1) Preparation of monomer composition

First, the monomer composition is prepared by mixing monomers that constitute the desired particulate polymer and other compounding agents added as required.

### (2) Formation of droplets

Next, the monomer composition is dispersed in water and polymerization initiator is added to form droplets of the monomer composition. Here, the method of forming droplets is not particularly limited. For example, droplets can be formed by shear stirring water containing the monomer composition using a disperser such as an emulsifier/disperser.

Examples of polymerization initiator that may be used include, for example, di(3,5,5-trimethylhexanoyl) peroxide, t-butyl peroxy-2-ethylhexanoate, azobisisobutyronitrile, and the like. The polymerization initiator may be added to the monomer composition after dispersion in water and before droplets are formed, or may be added to the monomer composition before dispersion in water.

From the viewpoint of stabilizing droplets of the monomer composition formed in water, adding a dispersion stabilizer to the water to form the monomer composition droplets is preferred. In such a case, a metal hydroxide such as magnesium hydroxide, sodium dodecylbenzenesulfonate, or the like may be used as a dispersion stabilizer.

### (3) Polymerization

After forming droplets of the monomer composition, the water containing the droplets is heated to initiate polymerization, resulting in formation of the particulate polymer in the water. The reaction temperature for polymerization is preferably 50 °C or more and 95 °C or less. Further, the reaction time for polymerization is preferably 1 hour or more to 10 hours or less, preferably 8 hours or less, and more preferably 6 hours or less.

In the polymerization, the particulate polymer is preferably obtained by a first polymerization process for polymerizing a first monomer composition including at least one of an aromatic vinyl monomer, an epoxy group-containing unsaturated monomer unit, or a nitrile group-containing unsaturated monomer unit; and, at a timing when a polymerization conversion rate in the first polymerization process becomes 70 % or more and 95 % or less, a second polymerization process for polymerizing a second monomer composition including at least one of an epoxy group-containing unsaturated monomer unit or a nitrile group-containing unsaturated monomer unit is added to the polymerization system for an addition time of 5 minutes or more to 1 hour or less Here, when mass of all monomer units contained in the first monomer composition and the second monomer composition is considered to be 100 mass%, the total amount of the epoxy-group containing unsaturated monomer unit and the nitrile-group containing unsaturated monomer unit is 5 mass% or more and 30 mass% or less. By carrying out such steps for the polymerization reaction, it is possible to efficiently produce a particulate polymer having a distribution structure in which concentration of both or at least one of oxygen atoms or nitrogen atoms decreases from the outermost surface inward in a region in the vicinity of the surface of the particulate polymer.

Further, when mass of all monomer units contained in the first monomer composition and the second monomer composition is considered to be 100 mass%, the total amount of the epoxy-group containing unsaturated monomer unit and the nitrile-group containing unsaturated monomer unit is preferably 7 mass% or more, more preferably 10 mass% or more, preferably 25 mass% or less, and more preferably 20 mass% or less. When mass of all epoxy group-containing unsaturated monomer units and nitrile group-containing unsaturated monomer units is equal to or greater than the lower limit described above, the wet adhesion of a resulting functional layer can be further improved. Further, when mass of all epoxy group-containing unsaturated monomer units and nitrile group-containing unsaturated monomer units is equal to or less than the upper limit described above, the particulate polymer can be stably prepared and the blocking resistance of a resulting functional layer can be increased.

Further, the addition time of the second monomer composition is preferably 5 minutes or more, more preferably 10 minutes or more, preferably 1 hour or less, and more preferably 30 minutes or less. By setting the addition time equal to or greater than the lower limit described above, the gradient distribution structure of the atoms X in the vicinity of the surface of the particulate polymer can be formed even better. Further, by setting the addition time equal to or less than the upper limit described above, efficiency of producing the particulate polymer can be increased.

### (4) Washing, filtration, dehydration, and drying processes

After the polymerization, the water containing the particulate polymer can be washed, filtered, and dried according to conventional methods to obtain the particulate polymer.

### (Composition for electrochemical element functional layer)

The composition for an electrochemical element functional layer according to the present disclosure contains the particulate polymer as the polymer for an electrochemical element functional layer as described above and a binder, and may optionally further contain other components such as heat resistant microparticles. The composition for a functional layer according to the present disclosure can then be used to form a functional layer for an electrochemical element that has excellent wet adhesion.

### <Particulate polymer>

The particulate polymer is the polymer for an electrochemical element functional layer according to the present disclosure as described above, and satisfies the various essential or preferred attributes described above. The particulate polymer is a polymer that has a particulate form in the composition for a functional layer. The particulate polymer may be in particle form or in any other form after members are adhered to each other via a functional layer formed using the composition for a functional layer.

### <Binder>

The binder in the composition for a functional layer is used to suppress detachment from a functional layer of components such as the particulate polymer in a functional layer formed using the composition for a functional layer. The form of the binder may be particulate or non-particulate, but from the viewpoint of good suppression of detachment of components from the functional layer, the form of the binder is preferably particulate. The binder may be in particle form or in any other form after the members are adhered to each other via a functional layer formed using the composition for a functional layer.

The binder is not particularly limited and may be a known polymer that is water insoluble and can be dispersed in a dispersion medium such as water. For example, the binder may be a binding resin such as a thermoplastic elastomer. As a thermoplastic elastomer, conjugated diene polymer and acrylic polymer are preferred, and acrylic polymer is more preferred. One of these binders may be used alone, or two or more may be used in combination in any ratio.

Here, acrylic polymer indicates a polymer including a (meth)acrylic acid ester monomer unit. Acrylic polymers that can be preferably used as the binder are not particularly limited, and examples include monomers containing, in addition to the (meth)acrylic acid ester monomer unit mentioned above, at least one monomer unit selected from the aromatic vinyl monomer unit, the nitrile group-containing unsaturated monomer unit, the cross-linkable monomer unit, or the epoxy group-containing unsaturated monomer unit as described above, or an acid group-containing monomer unit as described below.

### -Acid group-containing monomer unit-

Examples of acid group-containing monomers that can form an acid group-containing monomer unit include, for example, monomers that include a carboxylic acid group, monomers that include a sulfonic acid group, monomers that include a phosphoric acid group, and monomers that include a hydroxyl group.

Examples of monomers that include a carboxylic acid group include monocarboxylic acid, dicarboxylic acid, and the like. Examples of monocarboxylic acids include acrylic acid, methacrylic acid, crotonic acid, and the like. Examples of dicarboxylic acids include maleic acid, fumaric acid, and itaconic acid.

Further, examples of monomers including a sulfonic acid group include vinyl sulfonic acid, methyl vinyl sulfonic acid, (meth)allyl sulfonic acid, (meth)acrylate-2-sulfoethyl, 2-acrylamido-2-methyl propane sulfonic acid, 3-allyloxy-2-hydroxypropane sulfonic acid, and the like.

Hereinafter, "(meth)allyl" means allyl and/or methallyl, and "(meth)acryl" means acryl and/or methacryl.

Further, examples of monomers including a phosphoric acid group include 2-(meth)acryloyloxyethyl phosphate, methyl-2-(meth)acryloyloxyethyl phosphate, ethyl-(meth)acryloyloxyethyl phosphate, and the like.

Hereinafter, "(meth)acryloyl" means acryloyl and/or methacryloyl.

Further, examples of monomers including a hydroxyl group include, for example, 2-hydroxyethyl-acrylate, 2-hydroxypropyl-acrylate, 2-hydroxyethyl-methacrylate, 2-hydroxypropyl methacrylate, and the like.

One of these acid group-containing monomers may be used alone, or two or more may be used in combination in any ratio.

The ratio of the (meth)acrylic acid ester monomer unit in the acrylic polymer is preferably 50 mass% or more, more preferably 55 mass% or more, even more preferably 58 mass% or more, preferably 98 mass% or less, more preferably 97 mass% or less, and even more preferably 96 mass% or less. By setting the ratio of the (meth)acrylic ester monomer unit equal to or greater than the lower limit of the range described above, adhesion of a resulting functional layer can be increased. Further, by setting the ratio of the (meth)acrylic ester monomer unit equal to or less than the upper limit, electrochemical properties of a resulting electrochemical element including a functional layer can be further enhanced.

Further, the ratio of the cross-linkable monomer unit in the acrylic polymer is preferably 0.1 mass% or more, more preferably 1.0 mass% or more, preferably 3.0 mass% or less, and more preferably 2.5 mass% or less. By setting the ratio of the cross-linkable monomer unit equal to or greater than the lower limit described above, electrochemical properties of a resulting electrochemical element including a functional layer can be further enhanced. Further, by setting the ratio of the cross-linkable monomer unit equal to or less than the upper limit described above, adhesion of a resulting functional layer can be increased.

The ratio of the acid group-containing monomer unit in the acrylic polymer is preferably 0.1 mass% or more, more preferably 0.3 mass% or more, even more preferably 0.5 mass% or more, preferably 20 mass% or less, more preferably 10 mass% or less, and even more preferably 5 mass% or less. By setting the ratio of the acid group-containing monomer unit in the range described above, electrochemical properties of a resulting electrochemical element can be sufficiently enhanced.

### «Glass transition temperature of binder»

The glass transition temperature (Tg) of the binder is preferably -100 °C or more, more preferably -90 °C or more, even more preferably -80 °C or more, preferably less than 30 °C, more preferably 20 °C or less, and even more preferably 15 °C or less. When the glass transition temperature of the binder is equal to or greater than the lower limit described above, the adhesion and strength of the binder can be increased. On the other hand, when the glass transition temperature of the binder is equal to or less than the upper limit described above, the flexibility of a resulting functional layer can be increased.

### «Volume average particle size of binder»

Further, the volume average particle size of the binder is not particularly limited as long as the volume average particle size of the binder is smaller than the volume average particle size of the particulate polymer. For example, more specifically, the volume average particle size of the binder is preferably 0.05 µm or more, more preferably 0.10 µm or more, preferably 0.8 µm or less, and more preferably 0.5 µm or less. When the volume average particle size of the binder is equal to or greater than the lower limit described above, a decrease in ion conductivity of a resulting functional layer can be suppressed and a decrease in output characteristics of a resulting electrochemical element can be suppressed. On the other hand, when the volume average particle size of the binder is equal to or less than the upper limit described above, adhesive strength between components constituting a functional layer and between the functional layer and an adherend may be increased.

### <<Binder content>>

The content ratio of the binder in the composition is preferably 40 mass% or more, more preferably 50 mass% or more, preferably 70 mass% or less, and more preferably 60 mass% or less, per 100 mass% of the particulate polymer. When the content ratio of the binder relative to 100 mass% of the particulate polymer is equal to or greater than the lower limit described above, detachment of components such as the particulate polymer from a resulting functional layer can be suppressed to increase powdering resistance. On the other hand, when the content ratio of the binder relative to 100 mass% of the particulate polymer is equal to or less than the upper limit described above, a decrease in ion conductivity of a resulting functional layer can be suppressed and a decrease in output characteristics of a resulting electrochemical element can be suppressed.

### <<Content of binder when composition for functional layer contains heat resistant microparticles>>

When the composition for a functional layer contains heat resistant microparticles, the content of the binder is preferably 0.1 parts by mass or more, more preferably 0.2 parts by mass or more, even more preferably 0.5 parts by mass or more, preferably 20 parts by mass or less, more preferably 15 parts by mass or less, and even more preferably 10 parts by mass or less, per 100 parts by mass of heat resistant microparticles as described below. When the content of the binder is equal to or greater than the lower limit described above, detachment of components such as the particulate polymer from a resulting functional layer can be suppressed to increase powdering resistance. On the other hand, when the content of the binder is equal to or less than the upper limit described above, a decrease in ion conductivity of a resulting functional layer can be suppressed and a decrease in output characteristics of a resulting electrochemical element can be suppressed.

The binder can be prepared without any particular limitation, for example, by polymerizing a monomer composition containing monomers described above in an aqueous solvent such as water. Here, the ratio of each monomer in the monomer composition is typically the same as the ratio of each monomer unit in the binder.

Polymerization method and polymerization reaction are not particularly limited. For example, a polymerization method and polymerization reaction described above for the method of polymerizing the particulate polymer may be used.

### <Other components>

### «Heat resistant microparticles»

Heat resistant microparticles are other components that may optionally be included in the composition for a functional layer that act to increase the heat resistance of a resulting functional layer. Heat resistant microparticles may be inorganic particles. The material of the inorganic particles is preferably stable under a use environment of a resulting electrochemical element and electrochemically stable. From this viewpoint, examples of preferred materials for the inorganic particles include: oxide particles such as aluminum oxide (alumina), aluminum oxide hydrate (boehmite (AlOOH)), gibbsite (Al(OH₃)), silicon oxide, magnesium oxide (magnesia), magnesium hydroxide, calcium oxide, titanium oxide (titania), barium titanate (BaTiO₃), ZrO, and aluminasilica composite oxide; nitride particles such as aluminum nitride and boron nitride; covalent crystal particles such as silicon and diamond; insoluble ionic crystal particles such as barium sulfate, calcium fluoride, and barium fluoride; clay microparticles such as talc and montmorillonite; calcined kaolin, and the like. Among these, aluminum oxide, boehmite, magnesium hydroxide, barium sulfate, calcined kaolin, and barium titanate are more preferred, and aluminum oxide is even more preferred. This is so that the heat resistant microparticles have a greater relative density than the particulate polymer, and the head of the particulate polymer is more likely to emerge from a functional layer obtained by coating the composition for a functional layer, further increasing the wet adhesion of a resulting functional layer. Further, these particles may be subjected to elemental substitution, surface treatment, solid solution, and the like, as required. One of these heat resistant microparticles may be used alone, or two or more may be used in combination in any ratio.

### <Volume average particle size of heat resistant microparticles>

The volume average particle size (D50) of the heat resistant microparticles is preferably 0.1 µm or more, more preferably 0.2 µm or more, even more preferably 0.25 µm or more, preferably 1.5 µm or less, more preferably 1.0 µm or less, and even more preferably 0.8 µm or less. When the volume average particle size of the heat resistant microparticles is equal to or greater than the lower limit described above, a decrease in the ionic conductivity of a resulting functional layer can be further suppressed and the output characteristics of a resulting electrochemical element can be improved. When the volume average particle size of the heat resistant microparticles is equal to or less than the upper limit described above, then even when a resulting functional layer is thin, excellent heat resistance can be exhibited by the functional layer, and therefore capacity of a resulting electrochemical element can be increased.

### <<Other components other than heat resistant microparticles>>

The composition for a functional layer may contain other optional components aside from those mentioned above. Other components are not particularly limited as long as they do not affect electrochemical reactions in a resulting electrochemical element. Examples include known additives such as a dispersant, a viscosity modifier, a wetting agent, and the like. One of these other components may be used alone or in combination of two or more.

### <Method of preparing composition for electrochemical element functional layer>

The method of preparing the composition for a functional layer is not particularly limited. The composition can be prepared, for example, by mixing the particulate polymer, the binder, water as a dispersion medium, and other components used as required. When the particle polymer or the binder is prepared by polymerizing the monomer composition in an aqueous solvent, the particulate polymer or the binder may be mixed with other components in an aqueous dispersion. Further, when the particulate polymer or the binder are mixed in an aqueous dispersion, the water in the aqueous dispersion may be used as a dispersion medium.

Although the method of mixing the components described above is not particularly limited, a disperser is preferably used as a mixing device in order to efficiently disperse each component. The disperser is preferably capable of uniformly dispersing and mixing the components described above. Examples of dispersers include a ball mill, a sand mill, a pigment disperser, a grinding machine, an ultrasonic disperser, a homogenizer, a planetary mixer, and the like.

### (Substrate with functional layer for electrochemical element)

The functional layer for an electrochemical elements can be formed, for example, on a suitable substrate using the composition for a functional layer described above. The functional layer is formed on the substrate to obtain the substrate with functional layer for a non-aqueous secondary cell. Here, the functional layer contains at least the particulate polymer, the binder, and other components used as required. Each component in the functional layer was contained in the composition for a functional layer described above, and the preferred ratio of each of the components in the functional layer is the same as the preferred ratio of each component in the composition for a functional layer. The functional layer formed on the substrate has excellent wet adhesion, and therefore an electrochemical element including the substrate with functional layer can exhibit excellent electrochemical properties (cycle characteristics and output characteristics).

### <Substrate>

The substrate on which the functional layer is formed is not particularly limited. For example, when the functional layer is used as a part of a separator, a separator substrate can be used as the substrate, and when the functional layer is used as a part of an electrode, an electrode substrate consisting of an electrode composite layer on a current collector can be used as the substrate. Further, there is no particular restriction on the usage of the substrate with functional layer obtained by forming the functional layer on the substrate using the composition for an electrochemical element functional layer. For example, the functional layer may be formed on a separator substrate and used directly as an electrochemical element member such as a separator. For example, the functional layer may be formed on an electrode substrate and used directly as an electrode. For example, the functional layer formed on a separable substrate may be separated from the substrate and attached to another substrate for use as a battery member.

However, from the viewpoint of increasing efficiency of production of an electrochemical element member by omitting a process of separating a separable substrate from the functional layer, it is preferable to use a separator substrate or an electrode substrate as the substrate, and to use the substrate with functional layer directly as an electrochemical element member. The functional layer formed on a separator substrate or an electrode substrate contains the particulate polymer described above, and therefore can exhibit good wet adhesion. Further, the functional layer can improve the electrochemical properties of the electrochemical element.

### [Separator substrate]

Separator substrates on which the functional layer may be formed are not particularly limited and a separator substrate as described in JP 2012-204303 A may be used, for example. Among these, a microporous membrane made of polyolefin (polyethylene, polypropylene, polybutene, polyvinyl chloride) resin is preferred in terms of reducing overall thickness of the separator, thereby increasing the ratio of electrode active material in the electrochemical element and increasing capacity per unit of volume. The separator substrate may contain in part any layer other than the functional layer that can exhibit a desired function.

### [Electrode substrate]

Electrode substrates (positive electrode substrate and negative electrode substrate) on which the functional layer may be formed are not particularly limited, and include electrode substrates where an electrode composite layer is formed on a current collector. Here, known methods may be used for forming a current collector, components in an electrode composite layer (for example, electrode active material (positive electrode active material, negative electrode active material)), a binder for an electrode composite layer (binder for positive electrode composite layer, binder for negative electrode composite layer), and forming of the electrode composite layer on the current collector, as described in JP 2013-145763 A, for example. The electrode substrate may contain in part any layer other than the functional layer that has a desired function.

### [Separable substrate]

Separable substrates on which the functional layer may be formed are not particularly limited, and any known separable substrate may be used.

### <Method of forming functional layer for non-aqueous secondary cell>

The following are examples of methods used to form the functional layer on a substrate such as a separator substrate, electrode substrate, or the like, as described above:
(1) a method of applying the composition for a functional layer to a surface of a separator substrate or an electrode substrate (in the case of an electrode substrate, to a surface of an electrode composite layer, the same applies hereinafter), followed by drying;
(2) a method of dipping a separator substrate or an electrode substrate in the composition for a functional layer, followed by drying; and
(3) a method of producing the functional layer by applying and drying the composition for a functional layer on a separable substrate, and then transferring a resulting functional layer to a surface of a separator substrate or an electrode substrate.

Among these, method (1) above is particularly preferred due to ease of controlling the film thickness of the functional layer. Method (1) in detail includes a process of applying the composition for a functional layer on a separator substrate or an electrode substrate (application process) and a process of drying the composition for a functional layer applied on the separator substrate or the electrode substrate to form the functional layer (drying process).

In the application process, the method of applying the composition for a functional layer on a separator substrate or an electrode substrate is not particularly restricted, and example methods include spray coating, doctor blading, reverse roll coating, direct roll coating, gravure coating, extrusion coating, brush coating, and the like. Among these, from a viewpoint of forming a thinner functional layer, spray coating and gravure coating are preferred. In the drying process, a known method may be used to dry the composition for a functional layer on the substrate without any particular limitations, and examples include drying by warm, hot, or low-humidity air, vacuum drying, and drying by irradiation with infrared rays, electron beams, or the like. Drying conditions are not particularly limited, but the drying temperature is preferably 30 °C to 80 °C and the drying time is preferably 30 seconds to 10 minutes.

The thickness of the functional layer formed on the substrate is preferably 0.5 µm or more, more preferably 0.8 µm or more, even more preferably 1.0 µm or more, preferably 15 µm or less, more preferably 10 µm or less, and even more preferably 5 µm or less. When the thickness of the functional layer is equal to or greater than the lower limit of the range described above, the strength of the functional layer of the resulting functional layer can be sufficiently secured, and when the thickness is equal to or less than the upper limit of the range described above, the ion diffusivity of the functional layer can be secured and the output characteristics of a resulting electrochemical element can be further improved.

Here, in a functional layer formed using the composition for a functional layer, the binder, the particulate polymer, and the optional component heat resistant microparticles are typically stacked in the thickness direction of the functional layer. Further, depending on the combination of relative density and size of the mixed components, the particulate polymer that has a relatively large diameter may protrude from a filler layer that contains the binder and may contain optional component heat resistant microparticles. In such a case, the thickness of the functional layer may be defined as the vertical distance from the surface of the substrate on which the functional layer is formed to the binder or the heat resistance microparticles that form the surface of the functional layer.

### (Electrochemical element)

An electrochemical element including the functional layer according to the present disclosure need only include at least the substrate with functional layer for an electrochemical element according to the present disclosure, and therefore may include components other than the substrate with functional layer for an electrochemical element, as long as the effect described in the present disclosure is not thereby significantly impaired.

Further, the electrochemical element is not particularly limited, and may be, for example, a lithium-ion secondary cell or an electric double layer capacitor, and preferably a lithium-ion secondary cell.

The electrochemical element includes the substrate with functional layer for an electrochemical element as described above. More specifically, the electrochemical element may be one in which at least one of any of a positive electrode, a negative electrode, or a separator include the substrate with functional layer for an electrochemical element according to the present disclosure. When the functional layer is present on a separator, the functional layer may be formed on only one side of the separator substrate or may be formed on both sides of the separator substrate. The functional layer as described above has excellent wet adhesion, and therefore the electrochemical element including the functional layer has excellent electrochemical properties such as cycle characteristics and output characteristics.

The following describes a lithium-ion secondary cell as an example of the electrochemical element. As a positive electrode, a negative electrode, and an electrolyte solution other than components included in the substrate with functional layer for an electrochemical element according to the present disclosure, a positive electrode, a negative electrode, and an electrolyte solution known to be used in lithium-ion secondary cells can be used.

### <Electrolyte solution>

The electrolyte solution is typically an organic electrolyte solution in which supporting electrolyte is dissolved in an organic solvent. For example, lithium salt is used as the supporting electrolyte in lithium-ion secondary cells. Examples of lithium salts include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, (C₂F₅SO₂)NLi, and the like. Among these, LiPF₆, LiClO₄, and CF₃SO₃Li are easily soluble in solvents and exhibit high dissociation, and are therefore preferred. One type of electrolyte may be used alone, or a combination of two or more types may be used. Typically, lithium-ion conductivity tends to be greater the higher the dissociation of the supporting electrolyte used, and therefore the lithium-ion conductivity can be adjusted by the type of supporting electrolyte.

The organic solvent used in the electrolyte solution is not particularly limited as long as the supporting electrolyte can be dissolved. Preferred examples in a lithium-ion secondary cell include: carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; sulfur-containing compounds such as sulfolane and dimethyl sulfoxide; and the like.

Further, a mixed solution of these solvents may be used. Among these, carbonates have a high dielectric constant and wide stable potential range, and are therefore preferred. Typically, the lower the viscosity of the solvent used, the higher the lithium-ion conductivity tends to be, and therefore the lithium-ion conductivity may be adjusted by the type of solvent.

The concentration of the electrolyte in the electrolyte solution may be adjusted as needed. Further, known additives may be added to the electrolyte solution.

### <Method of producing lithium-ion secondary cell>

A lithium-ion secondary cell as the electrochemical element according to the present disclosure may be produced, for example, by overlapping the positive electrode and negative electrode described above either side of a separator with the functional layer, rolling, folding, and the like as required, placing in a battery container, filling the battery container with electrolyte solution, and sealing the container. Here, the battery container may include expanded metal, a fuse, an overcurrent protection device such as a PTC device, a lead plate, and the like as required to help prevent pressure increase inside the battery and help prevent overcharging or overdischarging. The shape of the battery may be, for example, a coin shape, a button shape, a sheet, cylindrical, rectangular, flat, or any other shape.

### EXAMPLES

Specific Examples are described below, but the present disclosure is not limited to these Examples. In the following description, "%" and "part" representing amounts are based on mass unless otherwise specified. Further, in a polymer produced by copolymerization of a plurality of types of monomer, the ratio of structural units formed by polymerization of a certain monomer in the polymer is typically equal to the ratio of the certain monomer among all the monomers used for polymerization of the polymer (feed ratio), unless otherwise specified. For the Examples and Comparative Examples, measurement and evaluation of various attributes were performed according to the following procedures.

### <Glass transition temperature>

Particulate polymers and binders prepared for the Examples and Comparative Examples were used as measurement samples. For each measurement sample, 10 mg was weighed into an aluminum pan, and measured with a differential scanning calorimeter ("EXSTAR DSC6220", produced by SII NanoTechnology Inc.) in a measurement temperature range from -100 °C to 500 °C at a heating rate of 10 °C/min, using an empty aluminum pan as a reference and under the conditions specified in Japanese Industrial Standard JIS Z 8703, and a differential scanning calorimetry (DSC) curve was obtained. During the heating process, the intersection of the baseline just before the endothermic peak of the DSC curve, where a derivative signal (DDSC) is 0.05 mW/min/mg or more, and a tangent line of the DSC curve at the first inflection point that appears after the endothermic peak, was determined as the glass transition temperature (°C).

### <Volume average particle size of particulate polymer>

Particulate polymers prepared for the Examples and Comparative Examples were used as measurement samples. A quantity equivalent to 0.1 g of the measurement sample was weighed, placed in a beaker, and 0.1 mL of alkylbenzenesulfonic acid aqueous solution ("Driwel", produced by Fujifilm Corporation) was added as a dispersant. To the beaker, another 10 mL to 30 mL of diluent ("Isoton II", produced by Beckman Coulter Inc.) was added and dispersed in a 20 W (Watt) ultrasonic disperser for 3 minutes. The volume average particle size of the measurement sample was then measured using a particle size analyzer ("Multisizer", produced by Beckman Coulter Inc.) under the following conditions: aperture diameter: 20 µm, medium: Isoton II, number of particles measured: 100,000. The particle size at which the cumulative volume calculated from the small diameter size end of the distribution is 50 % (D50) was taken as the volume average particle size of the measurement sample.

### <Volume average particle size of binder>

The volume average particle sizes of the binders prepared for the Examples and Comparative Examples were measured by laser diffraction. Specifically, a water dispersion solution containing the prepared binder (adjusted to a solid content concentration of 0.1 mass%) was used as the sample. In a particle size distribution (volume-based) measured using a laser diffraction particle size analyzer ("LS-230", produced by Beckman Coulter Inc.), the particle size D50, which is the particle size at which cumulative volume calculated from the small particle size end of the distribution is 50 %, was taken as the volume average particle size.

### <Average circularity of particulate polymer>

Particulate polymers prepared for the Examples and Comparative Examples were used as measurement samples. In a container, 10 mL of deionized water was placed in advance, to which 0.02 g of surfactant (alkylbenzenesulfonic acid) was added as a dispersant, and then 0.02 g of the measurement sample was added and dispersed using an ultrasonic disperser for 3 minutes at 60 W (watts). The concentration of the measurement sample at the time of measurement was adjusted to 3,000 particles/µL to 10,000 pieces/µL, and 1,000 particles to 10,000 particles having a circle equivalent diameter of 0.4 µm or more were measured using a flow particle image analyzer ("FPIA-3000", produced by Sysmex Corporation). Circularity is expressed by the following Expression (I), and the average circularity is obtained by taking the average thereof. Circularity = perimeter of circle of equivalent area to projected area of particulate polymer/perimeter of projected image of particulate polymer

### <Distribution of atoms X (oxygen atoms or nitrogen atoms) in vicinity of surface of particulate polymer>

The particulate polymer prepared for the Examples and Comparative Examples was thoroughly diffused into room temperature curable epoxy resin and then embedded to produce block pieces containing the particulate polymer. The block pieces were then cut into thin sections of 80 nm to 200 nm thickness with a microtome equipped with a diamond blade to prepare samples for measurement. The samples for measurement were then stained with, for example, ruthenium tetroxide or osmium tetroxide, as required. The samples for measurement were then each set on an atomic resolution analytical electron microscope (JEM-ARM200F NEOARM, produced by JEOL Ltd.) and the cross-section structure of the particulate polymer was imaged. An image range of 125 nm squares was obtained. Ten samples were randomly selected from the image range as particles to be measured.

Elemental analysis was then performed using an energy dispersive X-ray spectrometer (EDS) (JED-2300, produced by JEOL Ltd.) The atoms X to be analyzed were oxygen atoms in Examples 1-5, 7-9, and Comparative Examples 1-5, and nitrogen atoms in Example 6. By such elemental analysis, the relative concentration of the atoms X in the following regions I-III was measured, when the concentration of the atoms X at the outermost surface of the particulate polymer was considered to be 100 %.
- Region I: region 1.0 % or more and 1.5 % or less in depth in the direction from the outermost surface of the particulate polymer toward the center of the particulate polymer
- Region I: region 0.5 % or more and less than 1.0 % in depth in the direction from the outermost surface of the particulate polymer toward the center of the particulate polymer
- Region III: region less than 0.5 % in depth from the outermost surface of the particulate polymer

### <Thickness of functional layer>

For the Examples other than Example 9 and for the Comparative Examples, a cross-section of the separator with functional layer was observed using a field emission scanning electron microscope (FE-SEM), and the thickness of the inorganic particle layer was calculated from the images obtained. The thickness of the inorganic particle layer was defined as the vertical distance from the surface of the separator on the side where the functional layer was formed to the inorganic particles forming the surface of the functional layer.

For Example 9, the electrode with functional layer was the object of observation, and the same operation as above was performed, and the vertical distance was from the surface of the side of the electrode substrate where the functional layer was formed to the binder forming the surface of the functional layer.

### <Adhesion after immersion in electrolyte solution (wet adhesion)>

The positive electrodes and separators (with functional layers on both sides) made for the Examples and Comparative Examples were each cut into 50 mm long and 10 mm wide sections. The cut out positive electrodes and separators were then stacked. The obtained stacks were pressed using a roll press at a temperature of 25 °C and a load of 10 kN/m at a press speed of 30 m/min to obtain test pieces. The test pieces were immersed in electrolyte solution at a temperature of 60 °C for 72 hours. Here, the electrolyte solution was a mixture of ethylene carbonate (EC) and diethyl carbonate (DEC) (volume mixing ratio: EC/DEC = 1/2) containing LiPF₆ at a concentration of 1 M as the supporting electrolyte. After immersion, the test pieces were removed from electrolyte solution and the electrolyte solution was wiped off the surface of the test pieces. The test pieces were pressed again at 1 MPa, 80 °C for 3 minutes. After being pressed again, the test pieces were placed with the current collector side of the positive electrode face down, and cellophane tape (as specified in JIS Z1522) was attached to the surface of the positive electrode. The cellophane tape was fixed to a horizontal test stand. Stress was then measured when one end of the separator was pulled vertically upward and peeled off at pulling speed of 50 mm/min. The measurements were performed a total of three times. Separately, stacks of the negative electrodes and separators were obtained in the same manner as above, and the stacks were pressed to obtain test pieces. Then, in the same way as with the positive electrodes, test pieces after pressing again were obtained, and stress after immersion in the electrolyte solution was measured a total of three times.

The average value of stress from a total of six measurements using the positive electrodes and negative electrodes was determined as a second peel strength (N/m) and process adhesion between the electrode and separator through the functional layer after immersion in the electrolyte solution was evaluated using the following criteria. A higher second peel strength indicates better wet adhesion.
A: Second peel strength is 5.0 N/m or more
B: Second peel strength is 3.0 N/m or more and less than 5.0 N/m
C: Second peel strength is 1.0 N/m or more and less than 3.0 N/m
D: Second peel strength is less than 1.0 N/m

### <Blocking resistance of functional layer>

Separators with functional layers made for the Examples and Comparative Examples were cut into two 4 cm wide × 4 cm long pieces to be used as test pieces. The two test pieces obtained were overlaid with the functional layer sides facing each other, and then pressed using a flat plate press at a temperature of 40 °C and a load of 8 kN for 2 minutes to obtain a pressed body. One end of the pressed body was fixed in place and the other end of the pressed body was peeled off by pulling vertically upward at a tensile speed of 50 mm/min to measure stress. The obtained stress was taken as blocking strength. The blocking strength was then evaluated based on the following criteria. The smaller the blocking strength, the better the functional layer suppresses the occurrence of blocking, that is, the higher the blocking resistance of the functional layer.
A: Less than 2.0 N/m
B: 2.0 N/m or more and less than 3.0 N/m
C: 3.0 N/m or more and less than 4.0 N/m
D: 4.0 N/m or more

### <Cycle characteristics of secondary cells>

The lithium-ion secondary cells made for the Examples and Comparative Examples were allowed to stand at a temperature of 25 °C for 5 hours. Next, the cells were charged to a cell voltage of 3.65 V using 0.2 C constant current at a temperature of 25 °C, followed by aging treatment at a temperature of 60 °C for 12 hours. The cells were then discharged to a cell voltage of 3.00 V using 0.2 C constant current at a temperature of 25 °C. Then, CC-CV charging (upper cell voltage of 4.20 V) was performed using 0.2 C constant current, and CC discharge was performed to 3.00 V using 0.2 C constant current. This 0.2 C charging and discharging was repeated three times.

Subsequently, 100 cycles of charge-discharge operations were performed at a cell voltage of 4.20 V to 3.00 V and a charge-discharge rate of 1.0 C under a temperature of 25 °C. The discharge capacity of the 1st cycle was defined as X1 and that of the 100th cycle as X2.

Then, using the discharge capacities X1 and X2, the capacity retention rate ΔC' = (X2/X1) × 100 (%) was determined and evaluated according to the following criteria. The larger the value of the capacity retention rate ΔC', the better the cycle characteristics of the secondary cell.
A: Capacity retention rate ΔC' is 90 % or more
B: Capacity retention rate ΔC' is 85 % or more and less than 90 %
C: Capacity retention rate ΔC' is 80 % or more and less than 85 %
D: Capacity retention rate ΔC' is less than 80 %

### <Output characteristics of secondary cell>

The cells were prepared by charging the lithium-ion secondary cells made for the Examples and Comparative Examples at a constant current constant voltage (CCCV) up to 4.3 V in an atmosphere at a temperature of 25°C. The prepared cells were discharged to 3.0 V using 0.2 C and 1.5 C constant current to determine electrical capacity. The discharge capacity retention rate expressed as the ratio of electrical capacity [= (electrical capacity at 1.5 C / electrical capacity at 0.2 C) × 100 (%)] was then determined. This measurement was performed on five lithium-ion secondary cells. The average value of discharge capacity retention rate for each cell was then determined and evaluated using the following criteria. A higher average value of discharge capacity retention rate indicates that the secondary cell has better output characteristics.
A: Average value of discharge capacity retention rate is 90 % or more
B: Average value of discharge capacity retention rate is 85 % or more and less than 90 %
C: Average value of discharge capacity retention rate is less than 85 %

### (Example 1)

### <Preparation of particulate polymer>

### [Preparation of monomer composition (A)]

Monomer composition (A) was prepared by mixing 65 parts styrene as an aromatic vinyl monomer, 9.5 parts 2-ethylhexyl acrylate as a (meth)acrylic acid ester monomer, 0.5 parts ethylene glycol dimethacrylate as a cross-linkable monomer, and 5 parts glycidyl methacrylate as an epoxy group-containing unsaturated monomer.

### [Preparation of metal hydroxide]

Colloidal dispersion liquid (A) containing magnesium hydroxide as a metal hydroxide was prepared by gradual addition while stirring of an aqueous solution (A2) consisting of 5.6 parts of sodium hydroxide dissolved in 50 parts of deionized water into an aqueous solution (A1) consisting of 8 parts of magnesium chloride dissolved in 200 parts of deionized water.

### [Suspension polymerization]

Particulate polymer was prepared by suspension polymerization. Specifically, the monomer composition (A) was added to the colloidal dispersion liquid (A) containing the magnesium hydroxide, and after further stirring, 2.9 parts of di(3,5,5-trimethylhexanoyl) peroxide (PEROYL^{®} 355 (PEROYL is a registered trademark in Japan, other countries, or both), produced by NOF Corporation) was added as a polymerization initiator to obtain a mixed solution. The mixed solution was highly sheared and stirred for 1 minute at 15,000 rpm using an inline emulsifier/disperser ("Cavitron", produced by Pacific Machinery & Engineering Co., Ltd.) to form mixed solution drops of the monomer composition (A) in the colloidal dispersion liquid (A) containing magnesium hydroxide.

The colloidal dispersion liquid (A) containing magnesium hydroxide, in which droplets of the monomer composition were formed, was placed in a reactor and heated to 70 °C to conduct a first polymerization process. When the polymerization conversion rate reached 90 %, 10 parts of styrene as an aromatic vinyl monomer and 10 parts of glycidyl methacrylate as an epoxy group-containing unsaturated monomer were added for 10 minutes, and a polymerization reaction in a second polymerization process was conducted over 5 hours to obtain a water dispersion liquid containing particulate polymer.

Further, while stirring the water dispersion liquid containing the particulate polymer, sulfuric acid was added dropwise at room temperature (25 °C) and acid washing was performed until the pH became 6.5 or less. Subsequently, filtration separation was performed, and 500 parts of deionized water were added to the solids obtained and reslurried, and the water washing process (washing, filtration, and dehydration) was repeated a plurality of times. Subsequently, filtration separation was performed, and the resulting solids were placed in a dryer vessel and dried at 40 °C for 48 hours to obtain dry particulate polymer.

The volume average particle size and glass transition temperature of the resulting particulate polymer were then measured. Results are listed in Table 1.

### <Preparation of water dispersion liquid containing binder (α)>

In a reactor equipped with a stirrer, 70 parts of deionized water, 0.15 parts of sodium lauryl sulfate (EMAL^{®} 2F (EMAL is a registered trademark in Japan, other countries, or both), produced by Kao Corporation) as an emulsifier, and 0.5 parts of ammonium persulfate as a polymerization initiator were supplied, the gas phase was purged with nitrogen gas, and the temperature was raised to 60 °C.

Meanwhile, in a separate vessel, monomer composition (α) was prepared by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acid group-containing monomer, 2 parts of acrylonitrile as a nitrile group-containing unsaturated monomer, 1 part of allyl methacrylate as a cross-linkable monomer and 1 part of allyl glycidyl ether as an epoxy group-containing unsaturated monomer.

The monomer composition (α) obtained was continuously added to the reactor equipped with the stirrer described above over a period of 4 hours for polymerization. During the addition, the reaction was carried out at 60 °C. After the addition was completed, further stirring at 70 °C for 3 hours was carried out before the reaction was terminated to obtain a water dispersion liquid containing a particulate binder (α) as an acrylic polymer. The particulate binder (α) obtained had a volume average particle size of 0.25 µm and a glass transition temperature of -40 °C.

### <Preparation of composition for functional layer>

To 100 parts of alumina ("AKP30", produced by Sumitomo Chemical Co., Ltd., volume average particle size: 0.3 µm) as inorganic particles that are heat resistant microparticles, 0.5 parts of polyacrylic acid as dispersant was added, 5 parts of water dispersion liquid containing the binder (α) in solid content equivalent was added, 1.5 parts of carboxymethyl cellulose as thickening agent was added, deionized water was added so that the solid content concentration was 55 %, and the mixture was mixed using a ball mill to obtain a pre-mix slurry.

To 100 parts of the particulate polymer, 0.2 parts of sodium dodecylbenzenesulfonate ("Neopelex G-15", produced by Kao Corporation) as a surfactant was added, mixed to a solid content concentration of 40 %, and a resulting mixed solution was added to the pre-mix slurry. Further, deionized water was added so that the solid content concentration was 40 %, and a slurry composition (composition for functional layer) was obtained in which the mixing ratio of inorganic particles (alumina) and the particulate polymer was the mixing ratio listed in Table 1.

### <Preparation of separator with functional layer>

A fine porous membrane made of polyethylene (thickness: 12 µm) was prepared as a separator substrate. The slurry composition obtained as described above was applied to one side of the separator substrate by a bar coater method. Next, the separator substrate coated with the slurry composition was dried at 50 °C for 1 minute to form the functional layer. The same operation was performed on the other side of the separator substrate to produce a separator with functional layers on both sides of the separator substrate. The thickness of an inorganic particle layer in each functional layer was 2.0 µm.

### <Positive electrode preparation>

100 parts of LiCoO₂ (volume-average particle size: 12 µm) as positive electrode active material, 2 parts of acetylene black ("HS-100", produced by Denka Company Limited) as conductive material, 2 parts of polyvinylidene fluoride ("#7208", produced by Kureha Corporation) as binder for a positive electrode composite layer in terms of solid content, and N-methylpyrrolidone as a solvent were mixed to make the total solid content concentration 70 %. These were mixed by a planetary mixer to prepare a slurry composition for a positive electrode.

The slurry composition for a positive electrode was applied with a comma coater to a 20 µm thick aluminum foil as a current collector so that the film thickness after drying would be about 150 µm, then dried. The drying was performed by transporting the aluminum foil through a 60 °C oven at a speed of 0.5 m/min for 2 minutes. Subsequently, heat treatment was performed at 120 °C for 2 minutes to obtain a pre-pressing positive electrode web. The pre-pressing positive electrode web was rolled in a roll press to obtain a post-pressing positive electrode including a positive electrode composite layer (thickness: 60 µm).

### <Negative electrode preparation>

In a 5 MPa pressure vessel equipped with a stirrer, 33 parts of 1,3-butadiene, 3.5 parts of itaconic acid, 63.5 parts of styrene, 0.4 parts of sodium dodecylbenzenesulfonate as emulsifier, 150 parts of deionized water, and 0.5 parts of potassium persulfate as polymerization initiator were added, and after stirring thoroughly, the temperature was increased to 50 °C to start polymerization. When the polymerization conversion rate reached 96 %, the reaction was stopped by cooling to obtain a mixture containing the binder (SBR) for a negative electrode composite layer. To the mixture containing the binder for a negative electrode composite layer, a 5 % sodium hydroxide aqueous solution was added to adjust the pH to 8, and unreacted monomer was removed by thermal-vacuum distillation. Subsequently, the mixture was cooled to 30 °C or less to obtain a water dispersion liquid containing the desired binder for a negative electrode composite layer.

80 parts of artificial graphite (volume average particle size: 15.6 µm) as negative electrode active material (1) and 16 parts of silicon active material SiOx (volume average particle size: 4.9 µm) as negative electrode active material (2) were mixed, and 2.5 parts in terms of solid content of 2 % aqueous solution of carboxymethyl cellulose ("MAC350HC", produced by Nippon Paper Industries Co., Ltd.) as viscosity modifier and deionized water were mixed to adjust the solid content concentration to 68 %, after which the mixture was further mixed at 25 °C for 60 minutes. After further adjusting the solid concentration to 62 % with deionized water, the mixture was further mixed at 25°C for 15 minutes to obtain a mixed solution. 1.5 parts in terms of solid content of water dispersion liquid containing the binder for a negative electrode composite layer and deionized water were added to the mixed solution, so that the final solid content concentration was adjusted to 52 %, and further mixed for 10 minutes to obtain a mixed solution. The mixed solution was subjected to defoaming treatment under reduced pressure to obtain a slurry composition for a negative electrode that has good flowability.

The slurry composition for a negative electrode was applied with a comma coater to a 20 µm thick copper foil as a current collector, so that the film thickness after drying would be about 150 µm, then dried. The drying was performed by transporting the copper foil through a 60 °C oven at a speed of 0.5 m/min for 2 minutes. Subsequently, heat treatment was performed at 120 °C for 2 minutes to obtain a pre-pressing negative electrode web. The pre-pressing negative electrode web was rolled in a roll press to obtain a post-pressing negative electrode including a negative electrode composite layer (thickness: 80 µm).

Wet adhesion was evaluated using the separator with functional layers, positive electrode, and negative electrode obtained as described above. Results are listed in Table 1.

### <Preparation of lithium-ion secondary cell>

The post-pressing positive electrode prepared as described above was cut into a rectangle of 49 cm × 5 cm and placed so that the surface of the positive electrode composite layer side was on top, and on the positive electrode composite layer, the separator with functional layers cut into 120 cm × 5.5 cm was placed so that the positive electrode was on one side in the longitudinal direction of the separator with functional layers. Further, the post-pressing negative electrode prepared as described above was cut into a rectangle of 50 cm × 5.2 cm and placed on the separator with functional layers so that the surface of the negative electrode composite layer faced the separator with functional layers and the negative electrode was on the other side in the longitudinal direction of the separator with functional layers. The resulting stack was then wound by a winder to obtain a wound body. The wound body was pressed at 70 °C and 1 MPa to make a flat body, then wrapped in aluminum packing as the battery's outer packaging and electrolyte solution (solvent: ethylene carbonate/diethyl carbonate/vinylene carbonate (volume ratio) = 68.5/30/1.5, electrolyte: 1 M concentration LiPF₆) was injected so that no air remained. An opening of the aluminum packing was heat-sealed closed at a temperature of 150 °C to produce a wound lithium-ion secondary cell having a capacity of 800 mAh.

The lithium-ion secondary cell obtained was used to evaluate cycle characteristics and output characteristics of the secondary cell. Results are listed in Table 1.

### (Example 2)

Each operation, measurement, and evaluation was performed as for Example 1, except that in <Preparation of particulate polymer>, the second polymerization process was started at 95 % polymerization conversion rate and the concentration distribution of oxygen atoms in regions I and II of the particulate polymer was changed as listed in Table 1. Results are listed in Table 1.

### (Example 3)

Each operation, measurement, and evaluation was performed as for Example 1, except that in <Preparation of particulate polymer>, the amount of styrene mixed into the monomer composition (A) was reduced to 49.5 parts and the amount of 2-ethylhexyl acrylate was increased to 25 parts, so that the glass transition temperature of the particulate polymer became as listed in Table 1. Results are listed in Table 1.

### (Example 4)

Each operation, measurement, and evaluation was performed as for Example 1, except that in <Preparation of particulate polymer>, the amount of styrene was increased to 89 parts and the amount of 2-ethylhexyl acrylate was decreased to 0.5 parts, and further, the amount of glycidyl methacrylate was decreased to 10 parts and the timing of addition was adjusted appropriately to maintain the same concentration distribution of oxygen atoms in regions I-III of the particulate polymer as for Example 1, while the glass transition temperature of the particulate polymer became as listed in Table 1. Results are listed in Table 1.

### (Example 5)

Each operation, measurement, and evaluation was performed as for Example 1, except that in <Preparation of particulate polymer>, the particulate polymer was prepared using the pulverization method as described below to have an average circularity as listed in Table 1. Results are listed in Table 1.

### <<Preparation of particulate polymer according to pulverization method>>

65 parts styrene as an aromatic vinyl monomer, 9.5 parts 2-ethylhexyl acrylate as a (meth)acrylic acid ester monomer, 0.5 parts ethylene glycol dimethacrylate as a cross-linkable monomer, and 5 parts glycidyl methacrylate as an epoxy group-containing unsaturated monomer were mixed in toluene. 0.5 parts of azobisisobutyronitrile (AIBN) as a polymerization initiator was added and the reaction was carried out at 70 °C for 10 hours. After the reaction, precipitate purification was performed using methanol, and polymer was obtained via vacuum drying. The resulting polymer was then pulverized using a jet mill. The resulting pulverized material was classified in an airflow classifier ("100ATP", produced by Hosokawa Micron Corporation).

The classified pulverized material was then subjected to a heat spheroidization treatment to obtain the particulate polymer. Heat spheroidization treatment was performed using a heat spheroidization device ("SFS3 model", produced by Nippon Pneumatic Mfg. Co., Ltd.) at a temperature of 270 °C.

### (Example 6)

Each operation, measurement, and evaluation was performed as for Example 1, except that in <Preparation of particulate polymer>, when preparing monomer composition (A), 5 parts of acrylonitrile as the nitrile group-containing unsaturated monomer unit was mixed in instead of glycidyl methacrylate, and in the suspension polymerization, 10 parts of acrylonitrile as the nitrile group-containing unsaturated monomer unit was mixed in instead of glycidyl methacrylate. Results are listed in Table 1.

### (Example 7)

Each operation, measurement, and evaluation was performed as for Example 1, except that in <Preparation of particulate polymer>, when preparing monomer composition (A), 9.5 parts of butyl acrylate as the (meth)acrylic acid ester monomer was mixed in instead of 2-ethylhexyl acrylate. Results are listed in Table 1.

### (Example 8)

Each operation, measurement, and evaluation was performed as for Example 1, except that in <Preparation of water dispersion liquid containing binder (α)>, composition of monomer composition (α) was changed as follows to monomer composition (β). Results are listed in Table 1.

Monomer composition (β) was prepared by mixing 94 parts of 2-ethylhexyl acrylate as a (meth)acrylic acid ester monomer, 2 parts of styrene as an aromatic vinyl monomer, 2 parts of acrylic acid as an acid-containing monomer, and 1 part of allyl methacrylate and 1 part of allyl glycidyl ether as a cross-linkable monomer.

### (Example 9)

The composition for a functional layer was obtained in the same way as for Example 8 except that heat resistant microparticles were not mixed in, and the resulting composition for a functional layer was applied on the positive electrode substrate and the negative electrode substrate to obtain a positive electrode and a negative electrode with functional layer for an electrochemical element. Further, as a separator, a separator with a functional layer coated with the pre-mix slurry in <Preparation of composition for functional layer> was used. Other than these points, each operation, measurement, and evaluation was performed as for Example 1. Results are listed in Table 1.

The positive electrode obtained in the same way as for Example 1 was used as the positive electrode substrate, and the negative electrode obtained in the same way as for Example 1 was used as the negative electrode substrate.

### (Comparative Example 1)

Each operation, measurement, and evaluation was performed as for Example 1, except that in <Preparation of particulate polymer>, the second polymerization process was not performed, and therefore concentration distribution of oxygen atoms in regions I and II of the particulate polymer was changed as listed in Table 1. Results are listed in Table 1.

### (Comparative Example 2)

Each operation, measurement, and evaluation was performed as for Example 1, except that in <Preparation of particulate polymer>, the second polymerization process was started at 99 % polymerization conversion rate and the concentration distribution of oxygen atoms in regions I and II of the particulate polymer was changed as listed in Table 1. Results are listed in Table 1.

### (Comparative Example 3)

Each operation, measurement, and evaluation was performed as for Example 1, except that in <Preparation of particulate polymer>, the addition time of the second polymerization process was 1.5 hours and the concentration distribution of oxygen atoms in regions I and II of the particulate polymer was changed as listed in Table 1. Results are listed in Table 1.

### (Comparative Example 4)

Each operation, measurement, and evaluation was performed as for Example 1, except that in <Preparation of particulate polymer>, the addition time of the second polymerization process was 2 hours and the concentration distribution of oxygen atoms in regions I and II of the particulate polymer was changed as listed in Table 1. Results are listed in Table 1.

### (Comparative Example 5)

Each operation, measurement, and evaluation was performed as for Example 1, except that in <Preparation of particulate polymer>, the second polymerization process was started at 60 % polymerization conversion rate and the concentration distribution of oxygen atoms in regions I and II of the particulate polymer was changed as listed in Table 1. Results are listed in Table 1.

In Table 1:
"ST" indicates styrene,
"2EHA" indicates 2-ethylhexyl acrylate,
"EDMA" indicates ethylene glycol dimethacrylate,
"BA" indicates n-butyl acrylate,
"AN" indicates acrylonitrile,
"MAA" indicates methacrylic acid,
"AGE" indicates allyl glycidyl ether,
"AMA" indicates allyl methacrylate, and
"GMA" indicates glycidyl methacrylate.

**[Table 1]**

| | | | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|
| | | Atoms X [-] | | Oxygen | Oxygen | Oxygen | Oxygen | Oxygen | Nitrogen | Oxygen | Oxygen | Oxygen | Oxygen | Oxygen | Oxygen | Oxygen | Oxygen |
| | | Distribution of atoms X | Region I [%] | 30 | 50 | 30 | 30 | 30 | 30 | 30 | 30 | 30 | 100 | 10 | 70 | 40 | 90 |
| | | | Region II [%] | 65 | 70 | 65 | 65 | 65 | 65 | 65 | 65 | 65 | 100 | 65 | 70 | 40 | 90 |
| | | | Region III [%] | 100 | 100 | 100 | 100 | 100 | 100 | 100 | 100 | 100 | 100 | 100 | 100 | 100 | 100 |
| | | Distribution parameter | \|(III-II)-(II-I)\| [%] | 0 | 10 | 0 | 0 | 0 | 0 | 0 | 0 | 0 | 0 | 20 | 30 | 60 | 10 |
| | Particulate polymer | Glass transition temperature [°C] | | 80 | 80 | 40 | 100 | 80 | 80 | 80 | 80 | 80 | 80 | 80 | 80 | 80 | 80 |
| | | Average circularity [-] | | 0.99 | 0.99 | 0.99 | 0.99 | 0.90 | 0.99 | 0.99 | 0.99 | 0.99 | 0.99 | 0.99 | 0.99 | 0.99 | 0.99 |
| | | Composition | | ST/2HEA/EDMA/GMA | | | | | ST/2HEA/ EDMA/AN | ST/BA/ EDMA/GMA | ST/2HEA/EDMA/GMA | | | | | | |
| | | Epoxy group-containing unit or nitrile group-containing unit [mass%] | | 15 | 15 | 15 | 10 | 15 | 15 | 15 | 15 | 15 | 15 | 15 | 15 | 15 | 15 |
| Composition for functional layer | | Volume average particle size [µm] | | 3 | 3 | 3 | 3 | 3 | 3 | 3 | 3 | 3 | 3 | 3 | 3 | 3 | 3 |
| | Binder | Composition | | BA/AN/AMA/MAA/AGE | | | | | | | 2HEA/ST/AMA/AA/AGE | | BA/AN/AMA/MAA/AGE | | | | |
| | | Amount added [parts by mass] (relative to heat resistant microparticles 100 parts) | | 5 | 5 | 5 | 5 | 5 | 5 | 5 | 5 | - | 5 | 5 | 5 | 5 | 5 |
| | | Amount added [mass%] (relative to particulate polymer 100 mass%) | | 50 | 50 | 50 | 50 | 50 | 50 | 50 | 50 | 50 | 50 | 50 | 50 | 50 | 50 |
| | | Volume average particle size [µm] | | 0.25 | 0.25 | 0.25 | 0.25 | 0.25 | 0.25 | 0.25 | 0.25 | 0.25 | 0.25 | 0.25 | 0.25 | 0.25 | 0.25 |
| | Heat resistant microparticle | Volume average particle size [µm] | | 0.3 | 0.3 | 0.3 | 0.3 | 0.3 | 0.3 | 0.3 | 0.3 | - | 0.3 | 0.3 | 0.3 | 0.3 | 0.3 |
| | | Type | | Alumina | Alumina | Alumina | Alumina | Alumina | Alumina | Alumina | Alumina | - | Alumina | Alumina | Alumina | Alumina | Alumina |
| Functional layer | Thickness [µm] | | | 2 | 2 | 2 | 2 | 2 | 2 | 2 | 2 | 3 | 2 | 2 | 2 | 2 | 2 |
| | Coated area | | | On separator | On separator | On separator | On separator | On separator | On separator | On separator | On separator | On electrode | On separator | On separator | On separator | On separator | On separator |
| Evaluation | Wet adhesion | | | A | B | A | B | B | A | A | A | A | D | D | C | C | C |
| | Blocking resistance | | | A | A | B | A | A | A | A | A | A | A | A | C | C | A |
| | Cycle characteristics | | | A | B | A | B | B | A | A | A | A | D | D | C | C | C |
| | Output characteristics | | | A | A | A | B | B | A | A | A | A | C | C | C | C | C |

From Table 1, it can be seen that by using the composition for a functional layer of Examples 1 to 9, which contains the particulate polymer that satisfies the defined distribution structure of the atoms X, a functional layer having excellent wet adhesion can be formed. Further, it can be seen that when using the composition for a functional layer of Comparative Examples 1 to 5, which contains the particulate polymer that does not satisfy the defined distribution structure of the atoms X, a functional layer having excellent wet adhesion couldn't be formed.

### INDUSTRIAL APPLICABILITY

The present disclosure provides a polymer for a functional layer that can be appropriately used to form a functional layer having excellent wet adhesion and a method of producing same.

Further, the present disclosure provides a composition for a functional layer that can form a functional layer having excellent wet adhesion.

Further, the present disclosure provides a substrate with functional layer for an electrochemical element including the functional layer for an electrochemical element formed using the composition for a functional layer according to the present disclosure, and an electrochemical element including the substrate with functional layer.

## Claims

1. A particulate polymer for an electrochemical element functional layer, the particulate polymer comprising:
5 mass% or more and 30 mass% or less of at least one of an epoxy group-containing unsaturated monomer unit or a nitrile group-containing unsaturated monomer unit, wherein,
when distribution of at least one of oxygen atoms or nitrogen atoms, hereinafter referred to as atoms X, contained in the particulate polymer is obtained in the vicinity of a surface of the particulate polymer, when concentration of the atoms X at an outermost surface of the particulate polymer is considered to be 100 %, then in a direction from the outermost surface to a center of the particulate polymer, in a region of depth 1.0 % or more and 1.5 % or less, the concentration of the atoms X is 20 % or more and 50 % or less, in a region of depth 0.5 % or more and less than 1.0 %, the concentration of the atoms X is 50 % or more and 80 % or less, and in a region of depth less than 0.5 %, the concentration of the atoms X is 80 % or more and 100 % or less.

2. The polymer for an electrochemical element functional layer according to claim 1, wherein glass transition temperature is 40 °C or more and 150 °C or less.

3. The polymer for an electrochemical element functional layer according to claim 1, wherein average circularity is 0.90 or more and 0.99 or less.

4. The polymer for an electrochemical element functional layer according to claim 1, further comprising at least one of an aromatic vinyl monomer unit or a (meth)acrylic acid ester monomer unit.

5. A method of producing the polymer for an electrochemical functional layer according to any one of claims 1 to 4, the method comprising:
a first polymerization process for polymerizing a first monomer composition including at least one of an aromatic vinyl monomer, an epoxy group-containing unsaturated monomer unit, or a nitrile group-containing unsaturated monomer unit; and,
at a timing when a polymerization conversion rate in the first polymerization process becomes 70 % or more and 95 % or less, a second polymerization process for polymerizing a second monomer composition including at least one of an epoxy group-containing unsaturated monomer unit or a nitrile group-containing unsaturated monomer unit is added to the polymerization system for an addition time of 5 minutes or more to 1 hour or less, wherein,
when mass of all monomer units contained in the first monomer composition and the second monomer composition is considered to be 100 mass%, a total amount of the epoxy-group containing unsaturated monomer unit and the nitrile-group containing unsaturated monomer unit is 5 mass% or more and 30 mass% or less.

6. A composition for an electrochemical element functional layer, comprising a binder and the polymer for an electrochemical element functional layer according to any one of claims 1 to 4.

7. A substrate with functional layer for an electrochemical element, the substrate with functional layer comprising:
a substrate and a functional layer formed on the substrate, wherein
the functional layer is formed using the composition for an electrochemical element functional layer according to claim 6.

8. The substrate with functional layer for an electrochemical element according to claim 7, wherein the substrate is a separator substrate or an electrode substrate.

9. An electrochemical element comprising the substrate with functional layer for an electrochemical element according to claim 7.
